# EUROPEAN PATENT APPLICATION

(11) **EP 4 685 872 A1**
(43) Date of publication of application: **28.01.2026**
(21) Application number: 24898060.9
(22) Date of filing: 26.11.2024
(51) Int. Cl.: H01M 4/36, H01M 4/38, H01M 4/587, H01M 4/133, H01M 4/134, H01M 4/62, H01M 10/052, H01M 4/02

(54) **SILICON CARBON COMPOSITE, NEGATIVE ELECTRODE COMPOSITION, NEGATIVE ELECTRODE, LITHIUM SECONDARY BATTERY, BATTERY MODULE, BATTERY PACK, ELECTRIC VEHICLE, AND METHOD FOR MANUFACTURING SILICON CARBON COMPOSITE**

(30) Priority: 28.11.2023 KR 20230167493
(71) Applicant: LG Energy Solution, Ltd., Seoul 07335 (KR)
(72) Inventor: LEE, Jaewook, Daejeon 34122 (KR); KO, Minjin, Daejeon 34122 (KR); KWON, Yohan, Daejeon 34122 (KR); MIN, Jiwon, Daejeon 34122 (KR)
(74) Representative: Hoffmann Eitle
(86) International application number: PCT/KR2024/018798
(87) International publication number: WO 2025/116466

(57) **Abstract**

The present invention relates to: a silicon carbon composite; a negative electrode composition, a negative electrode, a lithium secondary battery, a battery module, a battery pack, and an electric vehicle comprising same; and a method for manufacturing the silicon carbon composite, wherein the silicon carbon composite comprises silicon and carbon, the content of silicon is 40 to 60 parts by weight with respect to 100 parts by weight of the silicon carbon composite, the content ratio (C/Si) of carbon to silicon is 30 or more after 10 seconds of etching time under the condition of Ta205 being etched at a rate of 0.15 nm/s during XPS analysis and is less than or equal to 15 after 1,000 seconds of etching time, and the oxygen content is less than or equal to 10 parts by weight with respect to 100 parts by weight of the silicon carbon composite.

## Description

### [Technical Field]

This application is based on and claims priority from Korean Patent Application No. 10-2023-0167493 filed on November 28, 2023, with the Korean Intellectual Property Office, the disclosure of which is incorporated herein in its entirety by reference.

The present disclosure relates to a silicon carbon composite, a negative electrode composition, a negative electrode, a lithium secondary battery, a battery module, and a battery pack.

### [Background Art]

Recently, with the rapid spread of electronic devices using batteries, such as not only mobile phones, laptop computers, and electric vehicles, but also power tools and vacuum cleaners, the demand for small-sized and lightweight secondary batteries having relatively high capacity and/or relatively high output is rapidly increasing. In particular, lithium secondary batteries are lightweight and have high energy density, and thus, have attracted attention as driving power sources for electronic devices. Accordingly, efforts of the research and development to improve the performance of lithium secondary batteries are being actively conducted.

### [Detailed Description of the Invention]

### [Technical Problem]

Silicon carbon composites have superior initial capacity and energy efficiency compared to graphite or silicon oxides, but have the limitation of low phase stability during a preparation process of a negative electrode using a negative electrode slurry, or during the storage of the negative electrode slurry. Accordingly, embodiments of the present disclosure provide a silicon carbon composite capable of improving the phase stability of the slurry, and a negative electrode composition and a negative electrode including the silicon carbon composite. In addition, embodiments of the present disclosure relate to a lithium secondary battery, a battery module, and a battery pack including the negative electrode.

### [Technical Solution]

An embodiment of the present disclosure provides a silicon carbon composite including silicon and carbon, in which an amount of the silicon is 40 to 60 parts by weight based on 100 parts by weight of the silicon carbon composite, and an amount ratio of the carbon to the silicon (C/Si) is 30 or more after the lapse of 10 seconds of etching time and is 15 or less after the lapse of 1,000 seconds of etching time under conditions where Ta₂O₅ is etched at a rate of 0.15 nm/s during XPS analysis, and an amount of oxygen is 10 parts by weight or less, based on 100 parts by weight of the silicon carbon composite.

An embodiment of the present disclosure provides a silicon carbon composite, in which the amount ratio of the carbon to the silicon (C/Si) is 30 or more in a region of 0 nm to 25 nm in depth from a surface of the silicon carbon composite and is 15 or less in a region of 200 nm to 300 nm in depth from the surface of the silicon carbon composite.

An embodiment of the present disclosure provides a negative electrode composition including the silicon carbon composite.

An embodiment of the present disclosure provides a negative electrode for a lithium secondary battery including a current collector; and a negative electrode active material layer provided on at least one surface of the current collector and including the negative electrode composition.

An embodiment of the present disclosure provides a lithium secondary battery including the negative electrode; a separator; and a positive electrode.

An embodiment of the present disclosure provides a battery module including the lithium secondary battery.

An embodiment of the present disclosure provides a battery pack including the lithium secondary battery.

An embodiment of the present disclosure provides a battery pack including the battery module.

An embodiment of the present disclosure provides an electric vehicle including the battery pack.

An embodiment of the present disclosure provides a method for preparing the silicon carbon composite.

### [Advantageous Effects]

A silicon carbon composite according to embodiments of the present disclosure includes a specific amount of silicon. At the same time, an amount ratio of carbon to silicon (C/Si) is different over time during XPS analysis, and an amount ratio of oxygen to silicon carbon composite falls within a specific range. Thus, it is possible to limit the contact between Si and water, and suppress oxidation reactions, thereby reducing the amount of hydrogen gases generated, so that excellent phase stability of a negative electrode slurry may be provided, and a negative electrode with high capacity and high efficiency may be achieved.

### [BRIEF DESCRIPTION OF THE DRAWINGS]

The following drawings attached hereto exemplify embodiments of the present disclosure and serve to help further understanding of the technical idea of the present disclosure together with the detailed description of the disclosure to be described later. Therefore, the present disclosure should not be construed as being limited to the matters illustrated in the drawings.
FIG. 1 is a view illustrating a battery pack including a battery cell according to an embodiment of the present disclosure.
FIG. 2 is a view illustrating an automobile including the battery pack of FIG. 1.

### [Best Mode]

Hereinafter, the present disclosure will be described in detail.

In the disclosure, when it is said that a certain part "includes" a certain component, this means that the certain part may further include other components rather than excluding other components unless specifically stated to the contrary.

In the disclosure, when one element is positioned "on" another element, this includes a case where the first element contacts the second element, or another element may be positioned between the first element and the second element.

Terms or words used in the disclosure should not be construed as being limited to general and dictionary meanings but should be interpreted as the meanings and concepts corresponding to the technical idea of the present disclosure based on the principle that the inventor is allowed to define terms appropriately in order to explain his/her invention in the best way possible.

Singular forms are intended to include plural forms unless otherwise indicated contextually.

In the disclosure, an average particle diameter D50 may be defined as a particle diameter corresponding to 50% of a volume accumulation amount in a particle size distribution curve of particles (graph curve of a particle size distribution plot). The average particle diameter D50 may be measured using, for example, a laser diffraction method. The laser diffraction method generally allows for the measurement of a particle diameter ranging from a submicron level to several millimeters (mm) and may obtain a result having high reproducibility and high resolution. The average particle diameter may be measured and determined by Microtrac equipment (Manufacturer: Microtrac, Model Name: S3500), using water and Triton-X100 dispersant. For example, an average particle diameter of a positive electrode active material may be measured in a range of a refractive index from 1.5 to 1.7, and an average particle diameter of a negative electrode active material may be measured under conditions of a refractive index of 1.97 or 2.42. For example, the average particle diameter may be measured by dispersing particles in a dispersion medium, introducing the particles into a commercially available laser diffraction particle size measuring apparatus, irradiating the particles with ultrasonic waves of about 28 kHz at an output of 60 W to obtain a volume- cumulative particle size distribution graph, and then, calculating a particle size corresponding to 50% of a volume accumulation amount in the volume-cumulative particle size distribution graph.

Lithium secondary batteries generate electric energy by oxidation and reduction reactions when lithium ions are intercalated/deintercalated between a positive electrode and a negative electrode in a state where an organic electrolyte or a polymer electrolyte is charged between the positive electrode and the negative electrode. The positive and negative electrodes are made of active materials capable of intercalation and deintercalation of the lithium ions.

Graphite is typically used as a negative electrode active material for lithium secondary batteries. However, since graphite has a capacity per unit mass of 372 mAh/g, which is relatively low, it is difficult to increase the capacity of lithium secondary batteries. Accordingly, in order to increase the energy density of lithium secondary batteries, negative electrode materials such as silicon, tin, and oxides thereof, are being developed as non-carbon negative electrode materials having the energy density higher than that of graphite.

In the present disclosure, in the lithium secondary battery using the silicon carbon composite as the negative electrode active material, the composition of the silicon carbon composite is controlled to provide excellent phase stability of a negative electrode slurry and provide a negative electrode with a high capacity and high efficiency.

Hereinafter, embodiments of the present disclosure will be described in detail. However, embodiments of the present disclosure may be modified in various forms, and the scope of the present disclosure is not limited to the embodiments described below.

### <Silicon Carbon Composite>

An embodiment of the present disclosure relates to a silicon carbon composite.

The silicon carbon composite according to an embodiment of the present disclosure is prepared by the following method.

First, an appropriate amount (e.g., about 0.9 g) of an amorphous porous carbon scaffold having an appropriate specific surface area (e.g., about 1850 m²/g to 1900 m²/g) and an appropriate pore volume (e.g., about 0.80 cm³/g to 0.85 cm³/g) was placed in a ceramic crucible and positioned at the center of a horizontal tube furnace. Next, the furnace was sealed, and nitrogen gases were purged therefrom, and the furnace temperature was gradually increased (e.g., increased to 450 °C to 500 °C at a rate of about 10 °C/min). Then, a silane gas and a hydrogen gas were added in the furnace at different flow rates and allowed to remain therein for a predetermined period of time (e.g., about 60 minutes to 90 minutes). As a result, a porous silicon carbon composite having an appropriate silicon amount (e.g., about 48 parts by weight) was prepared. Thereafter, the furnace temperature was additionally increased (e.g., increased to 780 °C to 900 °C at a rate of 10 °C/min) and a propane gas was added in the furnace at different flow rates and allowed to remain therein for a predetermined period of time (e.g., about 30 to 60 minutes), so that a porous silicon carbon composite having characteristics required in the present disclosure was prepared.

In the preparation of the porous silicon carbon composite described above, parameters in each process, such as the specific surface area and/or the amount of the amorphous porous carbon scaffold, the method of increasing the temperature of the furnace, and the flow rate and/or residence time of the silane gas and the hydrogen gas, may be controlled to obtain the characteristics of the silicon carbon composite required in the present disclosure. The process of preparing the porous silicon carbon composite is not limited to the preparation method described above, and any preparation method capable of obtaining the characteristics of the silicon carbon composite required in the present disclosure, may be used.

The amount of silicon in the silicon carbon composite prepared according to an embodiment of the present disclosure described above is 40 to 60 parts by weight, for example, 45 to 55 parts by weight, based on 100 parts by weight of the silicon carbon composite. When the amount of silicon is less than 40 parts by weight, the initial capacity of the active material is not sufficiently high. When the amount of silicon exceeds 60 parts by weight, it is difficult to form a structure in which the generation of hydrogen gas is suppressed, and it is also difficult to prepare a silicon carbon composite having a uniform Si distribution inside the carbon. As will be explained further in the experiment results below, the capacity and efficiency of the active material are appropriate and it is easy to suppress gas generation in the slurry within the above silicon amount range.

The amount of silicon may be obtained by calculating the amount of C and the amount of O in the silicon carbon composite, respectively, and then calculating the amount of silicon in an inverse manner. For example, the amount of C may be analyzed by a CS analyzer (Bruker, G8 Galileo), and the amount of O may be analyzed by an ONH (Bruker, G-4 ICARUS SeriesII) analyzer.

The amount ratio of carbon to silicon (C/Si) is 30 or more after the lapse of 10 seconds of etching time and is 15 or less after the lapse of 1,000 seconds of etching time under conditions where Ta₂O₅ is etched at a rate of 0.15 nm/s during XPS analysis.

As described above, when the amount ratio of carbon to silicon (C/Si) is 30 or more after the lapse of 10 seconds of etching time under conditions where Ta₂O₅ is etched at a rate of 0.15 nm/s during XPS analysis, it is advantageous in that carbon coating is evenly formed over the entire surface of the active material, so that the contact of the active material with water is restricted and oxidation reactions are suppressed, thereby reducing the amount of gases generated. When the amount ratio of carbon to silicon (C/Si) is 15 or less after the lapse of 1,000 seconds of etching time under conditions where Ta₂O₅ is etched at a rate of 0.15 nm/s during XPS analysis, it is advantageous in that there are no significant restriction on the movement of lithium ions due to an appropriate carbon layer thickness, and no significant problem in reaction with internal silicon, resulting in excellent capacity efficiency. Here, XPS analysis may be performed under the following conditions:
- Equipment Used: NEXSA G2, Thermo Fisher Scientific (Equipment Name: ESCA-03)
- Sample Preparation: press and put a powdered sample into a powder holder and flatten a measurement surface thereof.
- Measurement Conditions:
- X-ray Source: Monochromated Al Kα (1486.6 eV)

X-ray Spot Size: 400 µm
Etching Conditions (Sputtering Gun): monatomic Ar (energy: 1,000 eV, current: low, raster width: 2 mm)Charge Compensation (Flood Gun): 0.3 V, 150 µA
Survey Scan: pass energy 200 eV, energy step 1 Ev
Narrow Scan: pass energy 50 eV, energy step 0.1 eV
Sensitivity Factor (SF): Al THERMO1, Energy Correction Factor (ECF): TPP-2M
Background Subtraction: Smart

A plasmon loss peak of Si is not included in quantitative analysis.

The amount ratio of carbon to silicon (C/Si) may be 30 or more, for example, 35 or more, 40 or more, 45 or more, or 50 or more after the lapse of 10 seconds of etching time, under conditions where Ta₂O₅ is etched at a rate of 0.15 nm/s during XPS analysis.

The amount ratio of carbon to silicon (C/Si) may be 15 or less, for example, 12 or less, or 10 or less after the lapse of 1,000 seconds of etching time, under the conditions where Ta₂O₅ is etched at a rate of 0.15 nm/s during XPS analysis.

The amount ratio of carbon to silicon (C/Si) may be 100 or less, for example, 80 or less, 70 or less, or 60 or less after the lapse of 10 seconds of etching time, under conditions where Ta₂O₅ is etched at a rate of 0.15 nm/s during XPS analysis.

The amount ratio of carbon to silicon (C/Si) may be 1 or more, for example, 3 or more, 4 or more, 5 or more, or 6 or more after the lapse of 1,000 seconds of etching time, under conditions where Ta₂O₅ is etched at a rate of 0.15 nm/s during XPS analysis.

The amount ratio of carbon to silicon (C/Si) is 30 or more in a region of 0 nm to 25 nm in depth from a surface of the silicon carbon composite and is 15 or less in a region of 200 nm to 300 nm in depth from the surface of the silicon carbon composite.

Since the XPS analysis analyzes the components while the sample is being etched, an analysis result after the lapse of 1,000 seconds indicates an analysis result in a deeper region from the surface of the sample, compared to an analysis result after the lapse of 10 seconds as described above.

For example, the above-mentioned etching time of 10 seconds under the conditions where the Ta₂O₅ is etched at a rate of 0.15 nm/s means the time for etching from the surface of the silicon carbon composite to the region of 0 nm to 25 nm in depth and measuring an XPS (C/Si) value of the surface of the silicon carbon composite.

The above-mentioned etching time of 1,000 seconds under the conditions where the Ta₂O₅ is etched at a rate of 0.15 nm/s means the time for etching from the surface of the silicon carbon composite to the region of 200 nm to 300 nm in depth and measuring an XPS (C/Si) value of a deeper region from the surface of the silicon carbon composite.

The depth from the surface of the silicon carbon composite means the depth from the surface of the silicon carbon composite toward the center thereof.

The amount ratio of carbon to silicon (C/Si) may be 30 or more, for example, 35 or more, 40 or more, 45 or more, or 50 or more in the region of 0 nm to 25 nm in depth from the surface of the silicon carbon composite.

The amount ratio of carbon to silicon (C/Si) may be 15 or less, for example, 12 or less, or 10 or less in the region of 200 nm to 300 nm in depth from the surface of the silicon carbon composite.

The amount ratio of carbon to silicon (C/Si) may be 15 or less, for example, 12 or less, or 10 or less in the region of 0 nm to 25 nm in depth from the surface of the silicon carbon composite.

The amount ratio of carbon to silicon (C/Si) may be 1 or more, for example, 3 or more, 4 or more, 5 or more, or 6 or more in the region of 200 nm to 300 nm in depth from the surface of the silicon carbon composite.

The amount of oxygen in the silicon carbon composite is 10 parts by weight or less with respect to 100 parts by weight of the silicon carbon composite. When the amount of oxygen in the silicon carbon composite is 10 parts by weight or less, it is advantageous in that capacity degradation due to silicon oxidation may be minimized, and a loss in availability of of lithium due to oxygen may be reduced, thereby minimizing a decrease in the initial capacity and efficiency of the silicon carbon composite.

The amount of oxygen in the silicon carbon composite may be measured by, for example, an ONH analysis method.

The silicon amount, the oxygen amount, and a silicon carbon amount ratio having a C/Si amount ratio within a specific range over time during XPS analysis as described above, may vary depending on the carbonization conditions of a carbon structure (scaffold), the type of silane gas, thermal decomposition conditions, and carbon surface treatment conditions, and the like.

According to an embodiment of the present disclosure, the average particle diameter D50 of the silicon carbon composite may be 1 µm to 20 µm, for example, 1.5 µm to 15 µm, or 3 µm to 10 µm. When the particle diameter is within the above range, dispersibility of the active material is appropriate when preparing a slurry, and the problem of poor coating due to large particles during electrode coating is reduced.

According to an embodiment of the present disclosure, the specific surface area of the silicon carbon composite may be 20 m²/g or less, for example, 15 m²/g or less, or 10 m²/g or less, or 5 m²/g or less. The specific surface area of the silicon carbon composite may be 0.1 m²/g or more, 1 m²/g or more, 1.5 m²/g or more, 2 m²/g or more, or 3 m²/g or more. The specific surface area refers to a total specific surface area of a substrate, which is measured by a BET (Brunauer/Emmett/Teller) technique. The BET technique is used in the art to determine an accessible surface area of a material by using an inert gas, such as nitrogen, in order to measure the amount of gases adsorbed on the material. For example, the measurement may be performed by conducting a degassing process at 200 °C for 8 hours and conducting an N₂ adsorption/desorption process at 77 K using BET measuring equipment (e.g., BEL-SORP-MAX, Nippon Bell).

According to an embodiment of the present disclosure, the total amount of carbon and silicon is 90 parts by weight to 100 parts by weight based on 100 parts by weight of the silicon carbon composite.

According to one example, the silicon carbon composite may have a structure including a porous carbon structure and silicon provided inside and/or outside the porous carbon structure, or the silicon carbon composite may have a structure including a porous silicon structure and carbon provided inside and/or outside the porous silicon structure. It is unnecessary to prepare the silicon carbon composite by a specific preparation method, and the silicon carbon composite may be prepared by a method known in the art. For example, the silicon carbon composite may be prepared by a method including the step of preparing a porous carbon structure, for example, the step of preparing a porous carbon structure by thermally decomposing a polymer, and the step of growing silicon inside and/or outside the porous carbon structure by flowing a silane gas into the porous carbon structure to thermally decompose the silane gas at a high temperature. The preparation method may further include the step of modifying the surface layer with carbon or another component depending on its purpose. As another example, after Si and SiO2 are simultaneously deposited to produce a SiOₓ oxide (0<x<2) containing silicon (Si), the oxide is chemically etched to prepare a porous silicon structure, and then, the porous silicon structure is subjected to a heat treatment process with a carbon gas to prepare a silicon carbon composite.

### <Negative Electrode Composition and Negative Electrode>

The negative electrode composition according to an embodiment of the present disclosure includes a negative electrode active material including the silicon carbon composite prepared by the method described above.

The negative electrode according to an embodiment of the present disclosure includes a current collector; and a negative electrode active material layer provided on at least one surface of the current collector and including the negative electrode composition.

The negative electrode composition may further include an additional negative electrode active material.

As for the additional negative electrode active material, a compound capable of reversible intercalation and deintercalation of lithium ions may be used. Examples of the additional negative electrode active material may include carbonaceous materials such as artificial graphite, natural graphite, graphitized carbon fibers, and amorphous carbon; metallic substance such as Si, Al, Sn, Pb, Zn, Bi, In, Mg, Ga, Cd, or Si alloys, Sn alloys, or Al alloys, which are capable of being alloyed with lithium; metal oxides such as SiO_{β}(0<β<2), SnO₂, vanadium oxide, lithium titanium oxide, or lithium vanadium oxide, which are capable of doping and de-doping lithium; or composites, such as a Si-C composite and a Sn-C composite, including the metallic substance and the carbonaceous material. Among these, one type may be used alone, or a mixture of two or more types may be used.

In addition, low-crystalline carbon and high-crystalline carbon may be used as the carbonaceous material. An example of the low-crystalline carbon includes soft carbon and hard carbon. An example of the high-crystalline carbon includes high-temperature baked carbon such as amorphous, plate-like, flaky, spherical or fiber-like natural or artificial graphite, Kish graphite, pyrolytic carbon, mesophase pitch-based carbon fibers, meso-carbon microbeads, mesophase pitches, and petroleum and coal tar pitch derived cokes.

The additional negative electrode active material may be a carbonaceous active material, and may include, for example, graphite, for example, at least one of artificial graphite and natural graphite.

In an embodiment of the present disclosure, the weight ratio of the negative electrode active material and the additional negative electrode active material included in the negative electrode composition may be 1:99 to 99:1, for example, 10:90 to 90:10, for example, 5:95 to 50:50 or 10:90 to 30:70.

The negative electrode composition may further include a binder and a conductive material, and may further include a thickener, as needed.

The negative electrode active material layer may be formed by applying the negative electrode composition including the negative electrode active material, the binder, the conductive material, and as needed, the thickener to at least one surface of the current collector, and drying and rolling the negative electrode composition applied to the current collector.

The negative electrode current collector is not particularly limited, as long as it has conductivity without causing a chemical change in the battery. For example, as for the negative electrode current collector, copper, stainless-steel, aluminum, nickel, titanium, baked carbon, or aluminum or stainless-steel whose surface has been treated with carbon, nickel, titanium, or silver may be used. For example, a transition metal that absorbs carbon well, such as copper or nickel, may be used as the current collector. A thickness of the current collector may be 6 µm to 20 µm, but is not limited thereto.

The binder may include at least one selected from the group including polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, polyacrylic acid, ethylene-propylene-diene monomer (EPDM), sulfonated EPDM, styrene butadiene rubber (SBR), fluorine rubber, poly acrylic acid, and a material in which hydrogens of these are substituted with Li, Na, or Ca, and may also include various copolymers thereof, for example, a copolymer containing acrylamide and acrylonitrile.

The conductive material is not particularly limited as long as it has conductivity without causing a chemical change in the battery. As for the conductive material, for example, graphite, such as natural graphite or artificial graphite; carbon black such as acetylene black, Ketjen black, channel black, furnace black, lamp black, or thermal black; conductive fibers such as carbon fibers or metal fibers; conductive tubes such as carbon nanotubes; metal powder such as nickel powder, aluminum powder, or fluorinated carbon; conductive whisker such as zinc oxide or potassium titanate; a conductive metal oxide such as titanium oxide; and conductive materials such as polyphenylene derivatives, may be used.

The thickener may be carboxymethyl cellulose (CMC), but is not limited thereto, and any thickener used in the present technical field may be appropriately employed.

In an embodiment of the present disclosure, the total negative electrode active material included in the negative electrode composition may be included in an amount of 60 parts by weight to 99 parts by weight, for example, 70 parts by weight to 98 parts by weight, based on a total of 100 parts by weight of a solid content of the negative electrode composition.

In an embodiment of the present disclosure, the binder may be included in an amount of 0.5 parts by weight to 30 parts by weight, for example, 1 parts by weight to 20 parts by weight, based on the total of 100 parts by weight of the solid content of the negative electrode composition.

In an embodiment of the present disclosure, the conductive material may be included in an amount of 0.5 parts by weight to 25 parts by weight, for example, 1 parts by weight to 20 parts by weight, based on the total of 100 parts by weight of the solid content of the negative electrode composition.

In an embodiment of the present disclosure, the thickener may be included in an amount of 0.5 parts by weight to 25 parts by weight, for example, 0.5 parts by weight to 20 parts by weight, based on the total of 100 parts by weight of the solid content of the negative electrode composition.

The negative electrode composition according to an embodiment of the present disclosure may further include a solvent for forming the negative electrode composition. For example, the solvent for forming the negative electrode composition may include at least one selected from the group consisting of distilled water, ethanol, methanol, and isopropyl alcohol, for example, distilled water, in terms of facilitating dispersion of components.

In an embodiment of the present disclosure, a solid content weight of the negative electrode composition may be 20 parts by weight to 75 parts by weight, for example, 30 parts by weight to 70 parts by weight, based on the total of 100 parts by weight of the negative electrode composition.

### <Lithium Secondary Battery>

The lithium secondary battery according to an embodiment of the present disclosure may include the negative electrode according to the above-described embodiment. For example, the lithium secondary battery may include a negative electrode, a positive electrode, a separator interposed between the positive electrode and the negative electrode and may further include electrolyte. Since the negative electrode has been described above, a detailed description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. As for the positive electrode current collector, for example, stainless-steel, aluminum, nickel, titanium, baked carbon, or aluminum or stainless-steel whose surface has been treated with carbon, nickel, titanium, or silver may be used. The positive electrode current collector may typically have a thickness of 3 µm to 500 µm, and may form fine unevenness on a surface of the positive electrode current collector to strengthen adhesion of the positive electrode active material. For example, the positive electrode current collector may be used in various forms such as a film, a sheet, a foil, a net, a porous material, a foam, and a non-woven fabric.

The positive electrode active material may be a commonly used positive electrode active material. Examples of the positive electrode active material may include: layered compounds such as lithium cobalt oxide (LiCoO₂) and lithium nickel oxide (LiNiO₂) or compounds substituted with one or more transition metals; lithium iron oxide such as LiFe₃O₄; lithium manganese oxide such as chemical formula Li_{1+c1}Mn_{2-c1}O₄ (0≤c1≤0.33), LiMnO₃, LiMn₂O₃, and LiMnO₂; lithium copper oxide (Li₂CuO₂); vanadium oxide such as LiV₃O₃, V₂O₅, and C_{U2}V₂O₇; Ni site-type lithium nickel oxide represented by the chemical formula LiNi_{1-c2}M_{c2}O2 (where M is at least one selected from the group consisting of Co, Mn, Al, Cu, Fe, Mg, B and Ga, and 0.01≤c2≤0.5 is satisfied); lithium manganese composite oxide represented by a chemical formula LiMn_{2-c3}M_{c3}O₂ (where M is at least one selected from the group consisting of Co, Ni, Fe, Cr, Zn and Ta, and 0.01≤c3≤0.1 is satisfied) or Li₂Mn₃MO₈ (where M is at least one selected from the group consisting of Fe, Co, Ni, Cu and Zn); or LiMn₂O₄ in which a part of Li in the chemical formula is substituted with an alkaline earth metal ion, but are not limited to these elements. The positive electrode may also be Li-metal.

The positive electrode active material layer may include a positive electrode conductive material and a positive electrode binder together with the positive electrode active material described above.

Here, the positive electrode conductive material is used to provide conductivity to the electrode, and may be used without particular limitation as long as it has electronic conductivity without causing a chemical change in a configured battery. Examples of the positive electrode conductive material may include: graphite such as natural graphite or artificial graphite; carbonaceous materials such as carbon black, acetylene black, Ketjen black, channel black, furnace black, lamp black, thermal black, and carbon fibers; metal fibers or metal powder such as copper, nickel, aluminum, and silver; conductive whisker such as zinc oxide and potassium titanate; conductive metal oxides such as titanium oxide; or conductive polymers such as polyphenylene derivatives, and among these, one type may be used alone or a mixture of two or more types may be used.

Also, the positive electrode binder serves to improve the adhesion between particles of the positive electrode active material, and the adhesive strength between the positive electrode active material and the positive electrode current collector. Examples of the positive electrode binder may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro-rubber, or various copolymers thereof, and among these, one type may be used alone or a mixture of two or more types may be used.

The separator separates the negative electrode and the positive electrode and provides a movement path for lithium ions. Those commonly used as a separator in lithium secondary batteries may be used without any particular limitation, and for example, those having an excellent electrolyte moisture retention ability while having low resistance for ion migration of electrolyte, may be used. For example, as for the separator, porous polymer films, for example, porous polymer films prepared with a polyolefin-based polymer such as an ethylene homopolymer, a propylene homopolymer, an ethylene/butene copolymer, an ethylene/hexene copolymer and an ethylene/methacrylate copolymer, may be used, or a laminated structure of two or more layers thereof, may be used. In addition, common porous non-woven fabrics, for example, non-woven fabrics made of high melting point glass fibers or polyethylene terephthalate fibers, may be used. In addition, a coated separator including a ceramic component or a polymer material to secure heat resistance or mechanical strength, may be used, and may be selectively used in a single-layer structure or a multilayer structure.

Examples of the electrolyte may include an organic liquid electrolyte, an inorganic liquid electrolyte, a solid polymer electrolyte, a gel-type polymer electrolyte, a solid inorganic electrolyte, and a molten inorganic electrolyte that may be used in the manufacture of a lithium secondary battery, but are not limited thereto.

For example, the electrolyte may include a non-aqueous organic solvent and a metal salt.

As for the non-aqueous organic solvent, for example, aprotic organic solvents such as N-methyl-2-pyrrolidone, propylene carbonate, ethylene carbonate, butylene carbonate, dimethyl carbonate, diethyl carbonate, gamma- butyrolactone, 1,2-dimethoxy ethane, tetrahydrofuran, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate, may be used.

Among the above carbonate-based organic solvents, ethylene carbonate and propylene carbonate, which are cyclic carbonates, may be used because they are high-viscosity organic solvents and thus, easily dissociate lithium salts due to a high dielectric constant. When these cyclic carbonates are used through mixing with linear carbonates having a low viscosity and a low dielectric constant, such as dimethyl carbonate and diethyl carbonate, at an appropriate ratio, electrolyte having a high electrical conductivity may be made.

As for the metal salt, a lithium salt may be used, and the lithium salt is a material that is easily soluble in a non-aqueous electrolyte. For example, as for anions of the lithium salt, at least one selected from the group including F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, may be used.

In addition to the electrolyte components, the electrolyte may further include one or more types of additives, such as, for example, a haloalkylene carbonate-based compound such as difluoroethylene carbonate, pyridine, triethylphosphite, triethanolamine, cyclic ether, ethylene diamine, n-glyme, hexamethyl phosphoric acid triamide, nitrobenzene derivatives, sulfur, quinone imine dye, N-substituted oxazolidinone, N,N-substituted imidazolidine, ethylene glycol dialkyl ether, ammonium salt, pyrrole, 2-methoxy ethanol or aluminum trichloride.

According to another embodiment of the present disclosure, a battery module including the lithium secondary battery as a unit cell, and a battery pack including the battery module, are provided. The battery module and the battery pack include the lithium secondary battery having high capacity, high rate characteristics, and cycle characteristics, and therefore, may be used as a power source for medium-to-large sized devices selected from the group including electric vehicles, hybrid electric vehicles, plug-in hybrid electric vehicles and power storage systems.

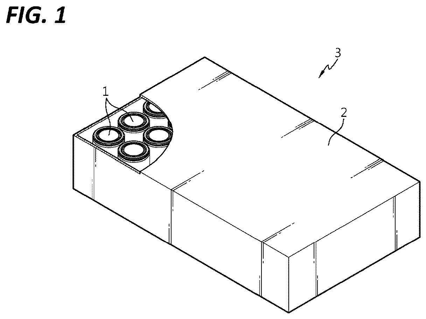

FIG. 1 is a view illustrating a battery pack 3 including a lithium secondary battery 1, according to an embodiment of the present disclosure.

Referring to FIG. 1, the battery pack 3, according to an embodiment of the present disclosure, includes a battery assembly in which a plurality of lithium secondary batteries 1 according to an embodiment of the present disclosure are electrically connected, and a pack housing 2 for accommodating the battery assembly. In the drawings of the present disclosure, components such as a bus bar, a cooling unit, and a power terminal for electrical connection are omitted for convenience of illustration.

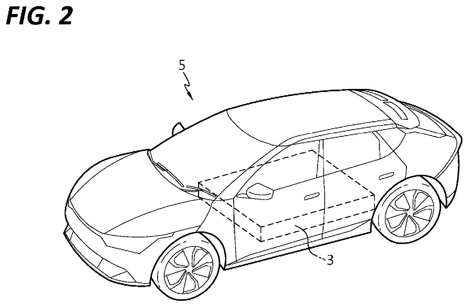

FIG. 2 is a view illustrating an automobile 5 including the battery pack 3 of FIG. 1.

Referring to FIG. 2, the automobile 5 according to an embodiment of the present disclosure may be, for example, an electric vehicle, a hybrid vehicle, or a plug-in hybrid vehicle, and includes the battery pack 3, according to an embodiment of the present disclosure. Examples of the automobile 5 include a four-wheeled automobile and a two-wheeled automobile. The automobile 5 is operated by receiving power from the battery pack 3 according to an embodiment of the present disclosure.

### Mode for Invention

Hereinafter, Examples will be presented to help understanding of the present disclosure, but the Examples are merely illustrative of the present description. It is obvious to those skilled in the art that various modifications and changes can be made within the scope of the present description and the scope of the technical idea, and it is natural that such modifications and changes fall within the scope of the accompanying claims.

### <Examples and Comparative Examples>

### Example 1

An amount of 0.9 g of an amorphous porous carbon scaffold having a specific surface area of 1850 m²/g to 1900 m²/g and a pore volume of 0.80 cm³/g to 0.85 cm³/g was disposed in a ceramic crucible and positioned in the center of a horizontal tube furnace. Next, the furnace was sealed and nitrogen gases were purged therefrom, and the furnace temperature was increased to 450 °C to 500 °C at 10 °C/min. Then, a silane gas and a hydrogen gas were added in the furnace at different flow rates and allowed to remain therein for 60 minutes to 90 minutes. As a result, a porous silicon carbon composite having a silicon amount of 48 parts by weight was prepared. Additionally, the furnace temperature was increased to 780 °C to 900 °C at a rate of 10 °C/min, and a propane gas was added in the furnace at different flow rates and allowed to remain therein for 30 minutes to 60 minutes, so that a porous silicon carbon composite having characteristics illustrated in Table 1 was prepared.

### Example 2

A porous silicon carbon composite was prepared in the same manner as in Example 1, except that a silane flow rate was increased so that a silicon amount in the porous silicon carbon composite was 52 parts by weight.

### Comparative Example 1

A porous silicon carbon composite was prepared in the same manner as in Example 1, except that the silane flow rate and residence time were reduced such that the silicon amount in the porous silicon carbon composite was 38 parts by weight.

### Comparative Example 2

A porous silicon carbon composite was prepared in the same manner as in Example 1, except that a first heating temperature was increased and the silane flow rate and the residence time were increased such that the silicon amount in the porous silicon carbon composite was 62 parts by weight.

### Comparative Example 3

A porous silicon carbon composite was prepared in the same manner as in Example 1, except that the furnace temperature in the last step of a porous silicon carbon composite preparation process was lowered and the residence time and the flow rate of the propane gas were lowered.

### Comparative Example 4

A porous silicon carbon composite was prepared in the same manner as in Example 1, except that the furnace temperature in the last step of the porous silicon carbon composite preparation process was increased and the residence time and the flow rate of the propane gas were increased.

### Comparative Example 5

A porous silicon carbon composite was prepared in the same manner as in Example 1, except that a gas where CO₂ gas is mixed with a propane gas was used during the porous silicon carbon composite preparation process.

The silicon amount, the oxygen amount, and a C/Si ratio by XPS analysis of the silicon carbon composites prepared in the Examples and Comparative Examples were measured by the following methods, and results thereof are illustrated in Table 1.
- Oxygen Amount: The oxygen amount of the composite was measured using an ONH analyzer.
- Silicon Amount: The amount of C was analyzed by a CS analyzer, and the amount of O was analyzed by an ONH analyzer, and the amount of C and the amount of O were subtracted from the total weight of the silicon carbon oxygen composite to calculate the silicon amount.
- C/Si ratio by XPS analysis: The C/Si ratio was measured by the above-described method using NEXSA G2, Thermo Fisher Scientific (Equipment Name ESCA-03).

| | Silicon Amount (based on 100 parts by weight of silicon carbon composite) | C/Si (lapse of 10 seconds in XPS analysis) | C/Si (lapse of 1,000 seconds in XPS analysis) | Oxygen Amount (based on 100 parts by weight of silicon carbon composite) |
|---|---|---|---|---|
| Example 1 | 48 | 50 | 10 | 1.8 |
| Example 2 | 52 | 45 | 6 | 1.8 |
| Comparative Example 1 | 38 | 54 | 14 | 1.5 |
| Comparative Example 2 | 62 | 35 | 3 | 1.6 |
| Comparative Example 3 | 49 | 8 | 1.2 | 1.5 |
| Comparative Example 4 | 44 | 54 | 17 | 1.6 |
| Comparative Example 5 | 46 | 52 | 9 | 12 |

### Experimental Example 1 (Binder Synthesis)

In a reactor equipped with a stirrer, a thermometer, a reflux condenser, and a nitrogen gas inlet, a polymer in an aqueous solution state was produced by mixing acrylamide, acrylic acid, and acrylonitrile in a weight ratio of 60:30:10, adding a polymerization initiator (ammonium persulfate) therein, and reacting them at 75°C for 6 hours.

Then, the polymer was neutralized with an aqueous NaOH solution to prepare a (meth)acrylic binder.

### (Preparation of Negative Electrode Slurry)

The silicon carbon composite prepared in Example 1 was used as a negative electrode active material, two types of particle-like conductive material (SFG6L) and SWCNT (Trade Name: Tuball OCSiAl) were used as a conductive material, and the aqueous binder of the above Experimental Example 1 was used, thereby preparing a negative electrode composition by mixing the negative electrode active material, particle-like conductive material, SWCNT, and aqueous binder in a ratio of 80:9.6:0.8:9.6 (based on a weight ratio).

A negative electrode slurry was prepared by adding water as a solvent, and the amount of water was adjusted in consideration of coating properties, viscosity, and solid content. The viscosity of the negative electrode slurry obtained was adjusted to 8000 cps.

Experimental Example 2 and Comparative Experimental Examples 1 to 5

A negative electrode slurry was prepared in the same manner as in Experimental Example 1, except that the silicon carbon composites of Example 2 and Comparative Examples 1 to 5 were used, instead of the silicon carbon composite of Example 1.

### <Evaluation 1: Measurement of Phase Stability (Viscosity Change) of Negative Electrode Slurry>

An amount of 5g of an active material or slurry was disposed in a pouch of 9 cm x 9 cm, and then, the pouch was sealed, and stored in a constant-temperature chamber at a relatively high temperature (e.g., 60°C) for 24 hours. Thereafter, gases inside the pouch were captured and the amount of the gases generated was measured using GC/MS.

### <Evaluation 2: Battery Manufacture and Battery Characteristics Evaluation>

The negative electrode slurry was coated on a copper foil having a thickness of 18 µm and dried, an electrode active material layer having a thickness of 50 µm was formed on one surface of the copper foil, and punching was performed thereon into a circle having a diameter of 14 Φ (mm), thereby preparing a test electrode (negative electrode). A metal lithium foil having a thickness of 0.3 mm was used as a positive electrode. A porous polyethylene sheet having a thickness of 0.1 mm was used as a separator. In addition, as for electrolyte, LiPF₆ serving as a lithium salt, which was dissolved at a concentration of about 1 mol/L in a mixed solvent of ethylene carbonate (EC) and diethyl carbonate (DEC) with a volume ratio of 1:1 was used.

The negative electrode, the positive electrode, the separator, and the electrolyte were sealed in a stainless-steel container to prepare an evaluation coin cell having a thickness of 2 mm and a diameter of 32 mm. The coin cell was charged at a constant current of 0.05C until a voltage reaches 0.01V, and discharged at a constant current of 0.05C until the voltage reaches 1.5V to obtain discharge capacity and initial efficiency. The results thereof are illustrated in Table 2 below.

**[Table 2]**

| | Slurry Phase Stability (H₂ Gas Generation Amount, µL) | Initial Discharge Capacity (mAh/g) | Initial Efficiency (%) |
|---|---|---|---|
| Experimental Example 1 | 20 | 1850 | 89 |
| Experimental Example 2 | 24 | 1900 | 88 |
| Comparative Experimental Example 1 | 12 | 1250 | 83 |
| Comparative Experimental Example 2 | 1400 | 1810 | 84 |
| Comparative Experimental Example 3 | 18500 | 1710 | 86 |
| Comparative Experimental Example 4 | 10 | 1400 | 83 |
| Comparative Experimental Example 5 | 30 | 1400 | 82 |

As illustrated in the results in Table 2 above, negative electrode slurries of Examples 1 and 2, and lithium secondary batteries using the negative electrode slurries, in which a Si amount of the silicon carbon composite was within a target range of 40 parts by weight to 60 parts by weight, an oxygen amount of the silicon carbon composite was within a target range of 10 parts by weight or less, and an XPS C/Si amount ratio at etching times of 10 seconds and 1000 seconds was controlled to a specific range (e.g., to 30 or more and 15 or less, respectively), exhibited a reduced amount of hydrogen gas generation and excellent initial discharge capacity and initial efficiency. In the meantime, when a Si amount in the silicon carbon composite of Comparative Example 1 was 38 parts by weight, which is relatively low, the initial discharge capacity and initial efficiency were relatively low. Comparative Example 2 was a case where the Si amount of the silicon carbon composite was 62 parts by weight, which exceeds the target range, and Comparative Example 3 was a case where an XPS C/Si amount ratio at the etching time of 10 seconds was 8, which was below the target range, and the gas generation amount was high and the initial efficiency and initial discharge capacity were not sufficient. Comparative Example 4 is a case where the XPS C/Si ratio at the etching time of 1000 seconds was 17, which was higher than 15 within the target range, and Comparative Example 5 is a case where the oxygen amount in the silicon carbon composite was 12 parts by weight, which was higher than 10 parts by weight within the target range, and the initial discharge capacity and initial efficiency were not sufficient.

## Claims

1. A silicon carbon composite comprising:
silicon; and
carbon,
wherein an amount of the silicon is 40 to 60 parts by weight based on 100 parts by weight of the silicon carbon composite, and
an amount ratio of the carbon to the silicon (C/Si) is 30 or more after a lapse of 10 seconds of etching time and is 15 or less after a lapse of 1,000 seconds of etching time under conditions where Ta₂O₅ is etched at a rate of 0.15 nm/s during XPS analysis, and
an amount of oxygen is 10 parts by weight or less, based on 100 parts by weight of the silicon carbon composite.

2. The silicon carbon composite according to claim 1, wherein the amount ratio of the carbon to the silicon (C/Si) is 30 or more in a region of 0 nm to 25 nm in depth from a surface of the silicon carbon composite, and is 15 or less in a region of 200 nm to 300 nm in depth from the surface of the silicon carbon composite.

3. The silicon carbon composite according to claim 1, wherein an average particle diameter D50 of the silicon carbon composite is 1 µm to 20 µm.

4. The silicon carbon composite according to claim 1, wherein a BET specific surface area of the silicon carbon composite is 20 m²/g or less.

5. A negative electrode composition for a lithium secondary battery comprising a negative electrode active material including the silicon carbon composite according to any one of claims 1 to 4.

6. The negative electrode composition according to claim 5, wherein the negative electrode active material further includes a carbonaceous active material.

7. The negative electrode composition according to claim 6, further comprising:
a binder and a conductive material.

8. A negative electrode comprising:
a current collector; and
a negative electrode active material layer provided on at least one surface of the current collector and including the negative electrode composition according to claim 5.

9. A lithium secondary battery comprising the negative electrode according to claim 8; a separator; and a positive electrode.

10. A battery module comprising the lithium secondary battery according to claim 9.

11. A battery pack comprising the lithium secondary battery according to claim 9.

12. A battery pack comprising the battery module according to claim 10.

13. An electric vehicle comprising the battery pack according to claim 12.

14. A method for preparing a silicon carbon composite including silicon and carbon,
wherein an amount of the silicon is 40 to 60 parts by weight based on 100 parts by weight of the silicon carbon composite, and
an amount ratio of the carbon to the silicon (C/Si) is 30 or more after a lapse of 10 seconds of etching time, and is 15 or less after a lapse of 1,000 seconds of etching time under conditions where Ta₂O₅ is etched at a rate of 0.15 nm/s during XPS analysis, and
an amount of oxygen based on 100 parts by weight of the silicon carbon composite is adjusted to 10 parts by weight or less.

15. The method according to claim 14, wherein the amount ratio of the carbon to the silicon (C/Si) is 30 or more in a region of 0 nm to 25 nm in depth from a surface of the silicon carbon composite and is 15 or less in a region of 200 nm to 300 nm in depth from the surface of the silicon carbon composite.
